# EUROPÄISCHE PATENTANMELDUNG

(11) **EP 3 484 021 A1**
(43) Veröffentlichungstag der Anmeldung: **15.05.2019**
(21) Anmeldenummer: 18200302.0
(22) Anmeldetag: 15.10.2018
(51) Int. Cl.: H02K 3/34, H02K 3/24, H02K 1/20, H02K 3/12

(54) **NUTWANDISOLATION FÜR EINEN STATOR EINES ELEKTROMOTORS**

(30) Priorität: 13.11.2017 DE 102017220123
(71) Anmelder: AUDI AG, 85045 Ingolstadt (DE)
(72) Erfinder: Weber, Korbinian, 85049 Ingolstadt (DE)

(57) **Zusammenfassung**

Elektromotor (10) umfassend einen Statorkörper mit einem Statorblechpaket (11) und einer Statornut (12), wobei die Statornut 12) eine Nutwand (13) mit einer Nutwandisolation (14) zur elektrischen Isolation aufweist, sowie mindestens einen elektrischen Leiter (17), der durch die Statornut (12) aufgenommen wird, wobei die Nutwandisolation (14) eine zahnförmige Ausgestaltung aufweist.

## Beschreibung

Die Erfindung betrifft einen Elektromotor mit einer Nutwandisolation sowie ein Verfahren zur Herstellung eines Elektromotors mit einer Nutwandisolation.

Bei kleineren Elektromotoren ist es gängig, die Statorblechpakete zur elektrischen Isolation mit Kunststoff zu umspritzen, wodurch die Isolation sowohl in den Statornuten, als Nutwandisolation, sowie auf den Stirnseiten des Blechpaketes komplett ausgebildet und verbunden ist und in einem Herstellungsschritt hergestellt werden kann. Nach dem Aufbringen der Isolation werden elektrische Leiter in die Statornuten eingebracht und anschließend imprägniert, um Bewegungen der elektrischen Leiter zu unterbinden und eine möglichst gute Wärmeleitfähigkeit der elektrischen Leiter zum Statorblechpaket zu gewährleisten. Die Imprägnierung erfolgt dabei mit einem Harz oder einem ähnlichen Material.

Die Wärmeleitfähigkeit von Nutisolationen ist jedoch ein leistungsbeschränkender Faktor für Elektromotoren. Bei klassischen Elektromotor-Kühlungsarchitekturen erfolgt üblicherweise ein Abführen der Verlustwärme aus den elektrischen Leitern durch die Imprägnierungs- und Isolationswerkstoffe über das Statorblechpaket nach außen. Eine hohe Wärmeleitfähigkeit der Nutwandisolation wie auch eine möglichst dünne Wandstärke der Nutwandisolation sind somit essentiell für die Elektromotorkühlung und damit für die Leistung.

Aus dem Dokument DE 10 2013 209 333 A1 ist ein Rotor oder Stator einer elektrischen Maschine bekannt, bei dem ein Isolationsmaterial im Spritzgussverfahren auf Statornuten aufgetragen wird und diese umschließt.

Das Dokument DE 20 308 665 U1 offenbart einen Innenläufer-Elektromotor, wobei ein Stator des Elektromotors im Spritzgussverfahren mit einer Isolationsschicht versehen wird.

Aus dem Dokument DE 19 964 061 A1 ist ein Elektromotor, insbesondere für Handwerkzeugmaschinen, bekannt, wobei ein Statorblechpaket des Elektromotors mit einer Nutisolation ausgestattet ist, welche im Spritzgussverfahren aufgebracht wird.

Bei bisher bekannten spritzgegossenen Kunststoffnutwandisolationen ist es möglich, dass sich die Kunststoff-Materialeigenschaften der Wärmeleitung und der Gießbarkeit speziell bei einer dünnen Wandstärke der Nutwandisolation kontradiktorisch verhalten. Ein gut zu vergießender Kunststoff, der dünne Isolationswände ausbildet, besitzt üblicherweise eine schlechte Wärmeleitfähigkeit und umgekehrt. Eine Erhöhung der Wärmeleitfähigkeit in Kunststoffen wird durch den Zusatz von Füllmaterial erreicht. Andererseits verschlechtern Füllmaterialien allerdings die Fließeigenschaften des Kunststoffes beim Spritzgussprozess.

Des Weiteren ist der Vorgang der Imprägnierung aus Prozess- und Qualitätssicht grundsätzlich nachteilig. Die Benetzung der elektrischen Leiter und der Nutwandisolation mit einem eingebrachten Imprägnierstoff, welcher ein Epoxyd-/Polyesterharz oder ähnliches Material sein kann, kann zudem aufgrund der schlechten Zugänglichkeit nicht direkt kontrolliert werden und daher nicht sichergestellt werden.

Daher ist es Aufgabe der Erfindung, einen Elektromotor mit einer Nutwandisolation bereitzustellen, die eine verbesserte Wärmeableitung ermöglicht.

Diese Aufgabe wird durch einen Elektromotor mit den Merkmalen des Anspruchs 1, einem Verfahren zur Herstellung eines Elektromotors mit den Merkmalen des Anspruchs 9 und einem Elektrofahrzeug mit den Merkmalen des Anspruchs 10 gelöst.

Gegenstand der vorliegenden Erfindung ist ein Elektromotor umfassend einen Statorkörper mit einem Statorblechpaket und mindestens einer Statornut, wobei die mindestens eine Statornut eine Nutwand mit einer Nutwandisolation zur elektrischen Isolation aufweist, sowie mindestens einen elektrischen Leiter, wobei die Statornut ausgebildet ist, den elektrischen Leiter aufzunehmen.

Erfindungsgemäß weist die Nutwandisolation eine von der Nutwand wegweisende zahnförmige Ausgestaltung auf. Die zahnförmige Ausgestaltung ist vorzugsweise beidseitig entlang der Statorwand als in einen Innenraum der Statornut hineinweisende Kontur ausgebildet. Vorzugsweise weist die zahnförmige Ausgestaltung Hervorhebungen und Aussparungen auf, wobei die Hervorhebungen als Zähne ausgebildet sind, die in den Innenraum der Statornut hineinreichen. Dabei sind sich gegenüberliegende Zähne vorzugsweise berührungsfrei zueinander ausgebildet. Die zahnförmige Ausgestaltung kann alternativ wellenförmig ausgebildet sein oder eine andere geometrische Ausgestaltung aufweisen. Die Anzahl der zahnförmigen Ausgestaltungen ist der Anzahl der elektrischen Leiter anpassbar. Die zahnförmige Ausgestaltung ist eingerichtet, die Lage mindestens eines elektrischen Leiters innerhalb der jeweiligen Statornut festzulegen. Durch die Festlegung bzw. Fixierung der elektrischen Leiter durch die zahnförmige Ausgestaltung bedarf es einer geringeren, wenn nicht sogar keiner zusätzlichen Imprägnierung der elektrischen Leiter, um mechanische Bewegungen der elektrischen Leiter und damit Abnutzungen der Isolation zu vermeiden.

In Ausgestaltung ist die Nutwandisolation auf einer Fläche mindestens eines Statorblechs des Statorblechpakets ausgebildet. Dabei ist die Nutwandisolation direkt auf dem Statorblech in einem Spritzgussprozess ausbildbar. Dies bietet den Vorteil, dass die Herstellung der erfindungsgemäßen zahnförmigen Ausgestaltung der Nutwandisolation keinen erhöhten Aufwand bei der Herstellung darstellt, sondern vielmehr in einem Schritt mit dem Statorblech herstellbar ist. Die direkte Ausbildung der verzahnten Nutwandisolation auf dem Statorblech ermöglicht zudem eine gute Wärmeableitung.

Bevorzugt bildet die Nutwandisolation durch die zahnförmige Ausgestaltung mindestens eine Aussparung aus, die eingerichtet ist, eine Lage mindestens eines in der Statornut angeordneten elektrischen Leiters festzulegen. Die mindestens eine Aussparung wird vorzugsweise zwischen zwei Zähnen der zahnförmigen Nutwandisolation ausgebildet. Die Zähne bilden dabei vorzugsweise eine Begrenzung für einen elektrischen Leiter, derart, dass dieser in seiner Lage festgehalten ist. Vorzugsweise ist die Anzahl der Aussparungen korrespondierend zu der Anzahl der in der Statornut anzuordnenden elektrischen Leiter ausgebildet. Besonders vorteilhaft sind die Aussparungen der zahnförmig ausgestalteten Nutwandisolation im Wesentlichen rechteckig ausgebildet, wobei die Form der Aussparung unabhängig von einer Form der elektrischen Leiter ausgebildet ist. Durch die Festlegung bzw. Fixierung der elektrischen Leiter durch die zahnförmige Ausgestaltung bedarf es einer geringeren, wenn nicht sogar keiner zusätzlichen Imprägnierung der elektrischen Leiter, um mechanische Bewegungen der elektrischen Leiter und damit Abnutzungen der Isolation zu vermeiden. Dies verkürzt ebenfalls den Herstellungsprozess, da der Prozessschritt der Imprägnierung wegfällt.

Besonders bevorzugt ist die zahnförmige Ausgestaltung eingerichtet, in der Statornut angeordnete elektrische Leiter mit einem bestimmten Abstand zueinander aufzunehmen. Dabei werden die elektrischen Leiter vorzugsweise axial in Bezug zu einer Drehachse des Stators in die Statornut eingebracht. Die zahnförmige Ausgestaltung ordnet dabei die elektrischen Leiter in einem durch die Zähne bestimmten Abstand zueinander an. Dies bietet den Vorteil, dass die elektrischen Leiter kontaktfrei zueinander ausgebildet sind.

In Ausgestaltung bildet die Nutwandisolation durch die zahnförmige Ausgestaltung Spalten aus. Die Spalten werden durch zwei sich gegenüberliegende Zähne der zahnförmigen Ausgestaltung ausgebildet, wobei die beiden sich gegenüberliegenden Zähne berührungsfrei zueinander ausgebildet sind. Der Spalt ist vorzugsweise als Fluidkanal ausgebildet und eingerichtet, ein Kühlfluid zu führen. Dies bietet den Vorteil, dass sich auch mit gängigen Rechteck-Profilleitern für jeden elektrischen Leiter ein Fluidkanal ausbilden lässt. Durch die Fluidkanäle ist ein Fluid, insbesondere ein Kühlfluid entlang der elektrischen Leiter führbar. Damit ist durch die zahnförmige Ausgestaltung der Nutwandisolation eine verbesserte, da direkte Kühlung der elektrischen Leiter (Direktleiterkühlung) des Elektromotors erzielbar. So werden bei einem Kühlvorgang, bei dem ein Kühlfluid die elektrischen Leiter in den Fluidkanälen umfließt, die elektrischen Leiter direkt gekühlt. Ein weiterer Vorteil, der sich ergibt, besteht darin, dass bei einer derartigen Direktleiterkühlung dünnere Isolationswände im Vergleich zu klassisch gekühlten Maschinen mit gespritzter Isolation hergestellt werden können, da die Nutwandisolation nicht mehr den primären Wärme-Ableitpfad darstellt, weil die Entwärmung der elektrischen Leiter direkt an das Fluid erfolgt. Somit können auch schlechter wärmeleitfähige, gussprozess-optimiertere Werkstoffe für die gespritze Isolation zum Einsatz kommen, ohne die Entwärmung und damit die Leistung der Maschine herabzusetzen.

In weiterer Ausgestaltung ist mindestens ein elektrischer Leiter geprägt ausgebildet. Der elektrische Leiter kann derart geprägt sein, dass er in einem Bereich, der nicht in Kontakt mit der Nutwandisolation steht, eine Ausprägung aufweist, die ausgebildet ist, ein Fluid aufzunehmen und zu führen, so dass ein Fluid entlang der Ausprägung des geprägten elektrischen Leiters fließen kann. Vorzugsweise ist die Ausprägung ausgebildet, den durch zwei sich gegenüberliegende Zähne gebildeten Spalt zu erweitern und somit den Fluidkanal zu bilden bzw. zu vergrößern. Optional ist die Fläche des elektrischen Leiters, die in Kontakt mit der Nutwandisolation steht, entsprechend der Ausformung der Nutwandisolation ausgebildet. Durch die Verwendung eines blanken elektrischen Leiters, der einen verbesserten konvektiven Wärmeübergang von dem elektrischen Leiter an das Kühlfluid ermöglicht, und der zusätzlich eine Prägung aufweist, ergibt sich der Vorteil, dass durch die zahnförmige Ausgestaltung die elektrische Kriechstrecke, d.h. die Isolation von einem elektrischen Leiter zu einem weiteren elektrischen Leiter, zwischen den einzelnen elektrischen Leitern vergrößert werden kann, ohne die elektrischen Leiter geometrisch voneinander weiter entfernen zu müssen.

In einer bevorzugten Ausgestaltung ist der elektrische Leiter u-förmig geprägt ausgebildet. Eine u-förmige Ausgestaltung ist besonders vorteilhaft, da sie einen möglichst großen Durchfluss durch den durch die Ausprägung und den Spalt gebildeten Fluidkanal ermöglicht. Alternativ kann der elektrische Leiter v-förmig, rechteckig oder bogenförmig ausgebildet sein oder eine andere geometrische Form aufweisen, die es ermöglicht, ein Fluid zu führen.

In Ausgestaltung ist der elektrische Leiter in die Statornuten einklebbar oder einklemmbar oder einpressbar ausgebildet. Dies ermöglicht ein schnelles Einbringen des mindestens einen elektrischen Leiters in eine der Statornuten, wodurch das Herstellungsverfahren schnell durchführbar ist. Zudem ist die Lage des elektrischen Leiters in der Statornut damit zusätzlich zur zahnförmigen Ausgestaltung festlegbar, so dass eine mechanische Bewegung der elektrischen Leiter vermieden werden kann.

Gegenstand der Erfindung ist auch ein Verfahren zur Herstellung eines Elektromotors mit einem der oben beschriebenen Merkmale, umfassend einen Statorkörper mit einem Statorblechpaket und mindestens einer Statornut, wobei die mindestens eine Statornut eine Nutwand mit einer Nutwandisolation zur elektrischen Isolation aufweist und die Statornut eingerichtet ist, elektrische Leiter aufzunehmen.

Das Verfahren umfasst in einem ersten Schritt a) die Herstellung eines Stators mit dem Statorblechpaket und der mindestens einen Statornut in einem Spritzguss. Dabei erfolgt gleichzeitig in einem Schritt b) die Ausformung einer zahnförmigen Ausgestaltung der Nutwandisolation während des Spritzgusses. Die zahnförmige Ausgestaltung wird dabei in Form einer zahnförmigen Kontur der Nutwandisolation in einem Schritt des Spritzgussverfahrens auf einem Statorblech ausgebildet.

In einem weiteren Schritt c) erfolgt die Bereitstellung mindestens eines elektrischen Leiters. Der elektrische Leiter wird in einem Schritt d) in die zahnförmig ausgestaltete Nutwandisolation eingebracht. Der elektrische Leiter wird vorzugsweise axial in die durch die zahnförmige Ausgestaltung der Nutwandisolation ausgebildeten Aussparungen eingebracht. Die zahnförmige Ausgestaltung der Nutwandisolation legt dabei die Lage des eingeführten elektrischen Leiters fest, wodurch eine mechanische Bewegung des elektrischen Leiters vermieden wird. Durch das Einbringen des elektrischen Leiters in die zahnförmig ausgestaltete Nutwandisolation wird in einem Schritt e) ein Spalt durch die zahnförmige Ausgestaltung ausgebildet. Der Spalt ist vorzugsweise als Fluidkanal ausgebildet. Der Spalt wird durch zwei sich gegenüberliegende Zähne der zahnförmigen Ausgestaltung der Nutwandisolation ausgebildet, wobei die beiden sich gegenüberliegenden Zähne berührungsfrei zueinander ausgebildet sind. Der als Fluidkanal ausgebildete Spalt führt vorzugsweise ein Kühlfluid. Dadurch kann ein elektrischer Leiter direkt über das an ihm entlangfließende Kühlfluid entwärmt werden. Durch die zahnförmige Ausgestaltung und das Festlegen der Lage des elektrischen Leiters durch die zahnförmige Ausgestaltung bedarf es keiner zusätzlichen Imprägnierung des elektrischen Leiters, um eine mechanische Bewegung zu vermeiden. In einem weiteren Schritt f) erfolgt die Inbetriebnahme des Elektromotors und das Durchlaufen des Spalts mit einem Fluid. Dadurch wird ein Kühlvorgang in Gang gesetzt und der elektrische Leiter und damit der erfindungsgemäß hergestellte Elektromotor werden entwärmt.

In einer bevorzugten Weiterbildung des Verfahrens wird der elektrische Leiter vor der Einbringung in die zahnförmig ausgestaltete Nutwandisolation geprägt.

Vorzugsweise erweitert die Ausprägung den durch zwei sich gegenüberliegende Zähne gebildeten Spalt und vergrößert somit den Fluidkanal. Vorteilhafterweise wird der elektrische Leiter dabei insbesondere u-förmig geprägt, wodurch der Spalt derart vergrößert wird, dass eine möglichst große Menge eines Fluids durch den Spalt geführt werden kann. Dies führt zu einer verbesserten Entwärmung des elektrischen Leiters und somit des Elektromotors.

Gegenstand der Erfindung ist auch ein Elektrofahrzeug umfassend einen voranstehend beschriebenen erfindungsgemäßen Elektromotor nach einem der oben beschriebenen Merkmale.

Die Erfindung ist anhand von Ausführungsformen in den Zeichnungen schematisch dargestellt und wird unter Bezugnahme auf die Zeichnungen weiter beschrieben. Es zeigt:
- Figur 1: eine schematische Darstellung eines Elektromotors mit einem Statorblechpaket mit einer Ausführungsform einer erfindungsgemäßen zahnförmigen Ausgestaltung einer Nutwandisolation,
- Figur 2a: eine schematische Darstellung einer weiteren Ausführungsform einer erfindungsgemäßen zahnförmigen Ausgestaltung einer Nutwandisolation mit eingesetzten geprägten elektrischen Leitern,
- Figur 2b: eine schematische Darstellung einer noch weiteren Ausführungsform einer erfindungsgemäßen zahnförmigen Ausgestaltung einer Nutwandisolation mit eingesetzten gängigen rechteckig geformten elektrischen Leitern,
- Figur 3a: eine mögliche Festhaltung eines elektrischen Leiters in einer Ausführungsform der erfindungsgemäßen zahnförmigen Ausgestaltung der Nutwandisolation,
- Figur 3b: eine mögliche Festhaltung eines elektrischen Leiters in einer Ausführungsform der erfindungsgemäßen zahnförmigen Ausgestaltung der Nutwandisolation,
- Figur 3c: eine mögliche Festhaltung eines elektrischen Leiters in einer Ausführungsform der erfindungsgemäßen zahnförmigen Ausgestaltung der Nutwandisolation.

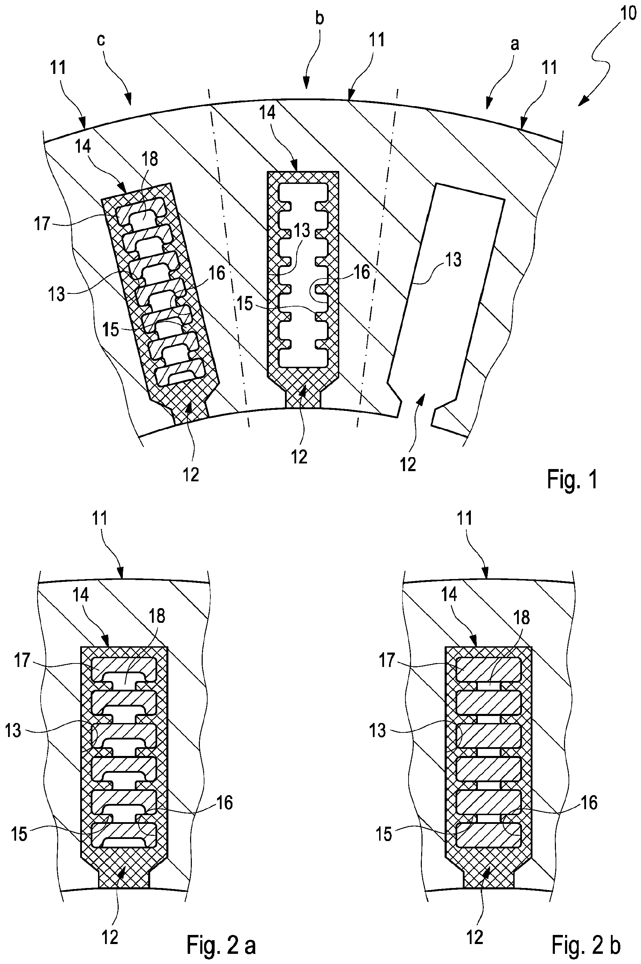

In der Figur 1 wird eine schematische Darstellung eines Statorblechpakets 11 eines Elektromotors 10 mit einer erfindungsgemäßen zahnförmigen Ausgestaltung einer Nutwandisolation 14 gezeigt. Dabei wird in drei Abschnitten a, b und c der Aufbau der erfindungsmäßen Nutwandisolation 14 dargestellt. In einem ersten Abschnitt a ist ein Statorblechpaket 11 gezeigt, in dem eine Statornut 12 dargestellt ist, die einer gängigen Ausgestaltung einer Statornut 12 mit einer Nutwand 13 entspricht.

In einem zweiten Abschnitt b ist ein Statorblechpaket 11 mit einer Statornut 12 und einer Nutwand 13 gezeigt, die eine erfindungsgemäße zahnförmig ausgestaltete Nutwandisolation 14 aufweist. Die zahnförmige Ausgestaltung der Nutwandisolation 14 wird dabei vorzugsweise in einem Spritzgussverfahren während der Herstellung des Statorblechspakets 11 des Elektromotors 10 ausgebildet. Die zahnförmige Ausgestaltung der Nutwandisolation 14 ist vorzugsweise beidseitig entlang der Nutwand 13 als in einen Innenraum der Statornut 12 hineinweisende Kontur ausgebildet. Vorzugsweise weist die zahnförmige Ausgestaltung Hervorhebungen und Aussparungen auf, wobei die Hervorhebungen als Zähne 15 ausgebildet sind, die in den Innenraum der Statornut 12 hineinreichen. Dabei sind sich gegenüberliegende Zähne 15 vorzugsweise berührungsfrei zueinander ausgebildet. Die zahnförmige Ausgestaltung kann alternativ wellenförmig ausgebildet sein oder eine andere geometrische Ausgestaltung aufweisen. Die Anzahl der zahnförmigen Ausgestaltungen ist der Anzahl der elektrischen Leiter 17 anpassbar. Die zahnförmige Ausgestaltung ist eingerichtet, die Lage mindestens eines elektrischen Leiters 17 festzulegen. Die Nutwandisolation 14 ist ferner vorzugweise aus einem Kunststoff ausgebildet.

In einem dritten Abschnitt c wird die zahnförmig ausgestaltete Nutwandisolation 14 mit in Aussparungen der verzahnten Ausgestaltung eingebrachten elektrischen Leitern 17 dargestellt. Dabei sind die elektrischen Leiter 17 geprägt, insbesondere u-förmig geprägt, ausgebildet dargestellt. Zwischen zwei sich gegenüberliegenden Zähnen 15 der zahnförmig ausgestalteten Nutwandisolation 14 wird dabei ein Spalt 18 ausgebildet, der durch die u-förmig ausgestaltete Ausprägung der elektrischen Leiter 17 erweitert wird. Der Spalt 18 ist insbesondere als Fluidkanal ausgebildet, so dass ein Fluid direkt entlang der elektrischen Leiter 17 führbar ist, so dass die elektrischen Leiter 17 direkt gekühlt werden können. So werden bei einem Kühlvorgang, bei dem ein Kühlfluid die elektrischen Leiter 17 in den Fluidkanälen 18 umfließt, die elektrischen Leiter 17 direkt gekühlt, wobei die gesamte Statornut 12 von dem Fluid durchflossen werden kann. Ein weiterer Vorteil, der sich ergibt, besteht darin, dass bei einer derartigen Direktleiterkühlung dünnere Isolationswände im Vergleich zu klassischgekühlten Maschinen mit gespritzter Isolation hergestellt werden können, da die Nutwandisolation 14 nicht mehr den primären Wärme-Ableitpfad darstellt, weil die Entwärmung der elektrischen Leiter 17 direkt an das Fluid erfolgt. Somit können auch schlechter-wärmeleitfähige, gussprozess-optimiertere Werkstoffe für die gespritzte Isolation zum Einsatz kommen, ohne die Entwärmung und damit die Leistung der Maschine herabzusetzen.

In der Figur 1 wird zudem das Verfahren der Herstellung eines Elektromotors 10 mit der erfindungsgemäßen Nutwandisolation 14 dargestellt. Dabei umfasst das Verfahren zur Herstellung eines Elektromotors 10 einen Elektromotor 10 mit einen Statorkörper, der ein Statorblechpaket 11 und mindestens eine Statornut 12 umfasst, wobei die Statornut 12 eine Nutwand 13 mit einer Nutwandisolation 14 zur elektrischen Isolation aufweist und die Statornut 12 eingerichtet ist, elektrische Leiter 17 aufzunehmen. In einem ersten Schritt a) erfolgt die Herstellung eines Stators mit dem Statorblechpaket 11 und der mindestens einen Statornut 12 in einem Spritzguss. Gleichzeitig erfolgt in einem Schritt b) eine Ausformung einer zahnförmigen Ausgestaltung der Nutwandisolation 14 während des Spritzgusses. In einem weiteren Schritt c) erfolgt die Bereitstellung mindestens eines elektrischen Leiters 17, der in einem weiteren Schritt d) in die Statornut 12 eingebracht wird. Der elektrische Leiter 17 wird vorzugsweise axial in die zahnförmige Ausgestaltung der Nutwandisolation 14 eingebracht. Die zahnförmige Ausgestaltung der Nutwandisolation 14 legt dabei die Lage des eingeführten elektrischen Leiters 17 fest, wodurch eine mechanische Bewegung des elektrischen Leiters 17 vermieden wird. Durch das Einbringen des elektrischen Leiters 17 in die zahnförmig ausgestaltete Nutwandisolation 14 wird in einem Schritt e) ein Spalt 18 durch die zahnförmige Ausgestaltung ausgebildet. Der Spalt 18 ist vorzugsweise als Fluidkanal ausgebildet. Durch den Fluidkanal wird ein Fluid, insbesondere ein Kühlfluid, geführt. Dadurch wird ein elektrischer Leiter 17 direkt über das an ihm entlang fließende Kühlfluid entwärmt. In einem weiteren Schritt f) erfolgt die Inbetriebnahme des Elektromotors 10 und das Durchlaufen des Spalts 18 mit einem Fluid. Dadurch wird ein Kühlvorgang in Gang gesetzt und der Elektromotor 10 wird entwärmt. Wie in Abschnitt c ferner dargestellt, wird der elektrische Leiter 17 vor der Einbringung in die zahnförmig ausgestaltete Nutwandisolation 14 geprägt. Die Ausprägung erweitert die gebildete Spalte 18 und vergrößert somit den Fluidkanal. Vorteilhafterweise wird der elektrische Leiter 17 dabei insbesondere u-förmig geprägt, wodurch der Spalt 18 derart vergrößert wird, dass eine möglichst große Menge eines Fluids durch den Spalt 18 geführt werden kann. Dies führt zu einer verbesserten Entwärmung des elektrischen Leiters 17 und somit des Elektromotors 10.

In der Figur 2a wird eine schematische Darstellung einer erfindungsgemäßen zahnförmigen Ausgestaltung einer Nutwandisolation 14 mit eingesetzten geprägten elektrischen Leitern 17 dargestellt. Die zahnförmige Ausgestaltung ist vorzugsweise beidseitig entlang der Nutwand 13 als in einen Innenraum der Statornut 12 hineinweisende Kontur ausgebildet. Vorzugsweise weist die zahnförmige Ausgestaltung Hervorhebungen und Aussparungen 16 auf, wobei die Hervorhebungen als Zähne 15 ausgebildet sind, die in den Innenraum der Statornut 12 hineinreichen. Dabei sind sich gegenüberliegende Zähne 15 berührungsfrei zueinander ausgebildet. Die zahnförmige Ausgestaltung kann alternativ wellenförmig ausgebildet sein oder eine andere geometrische Ausgestaltung aufweisen. Die Anzahl der zahnförmigen Ausgestaltungen ist der Anzahl der elektrischen Leiter 17 vorzugsweise anpassbar. Vorzugsweise ist die zahnförmige Ausgestaltung eingerichtet, die Lage mindestens eines elektrischen Leiters 17 festzulegen. Durch die Festlegung bzw. Fixierung der elektrischen Leiter 17 durch die zahnförmige Ausgestaltung bedarf es einer geringeren, wenn nicht sogar keiner zusätzlichen Imprägnierung der elektrischen Leiter 17, um mechanische Bewegungen der elektrischen Leiter 17 und damit Abnutzungen der Isolation zu vermeiden.

In der Figur 2b wird eine schematische Darstellung einer erfindungsgemäßen zahnförmigen Ausgestaltung einer Nutwandisolation mit eingesetzten gängigen rechteckigen elektrischen Leitern 17 dargestellt. Die zahnförmige Ausgestaltung der Nutwandisolation 14 bildet dabei Spalten 18 aus, durch die ein Fluid führbar ist. Die erfindungsgemäße Ausgestaltung ermöglicht somit eine direkte Kühlung der elektrischen Leiter 17 mittels eines durch die Spalten 18 geführten Fluids, selbst bei einer Verwendung von bisher gängigen rechteckig ausgebildeten elektrischen Leitern 17.

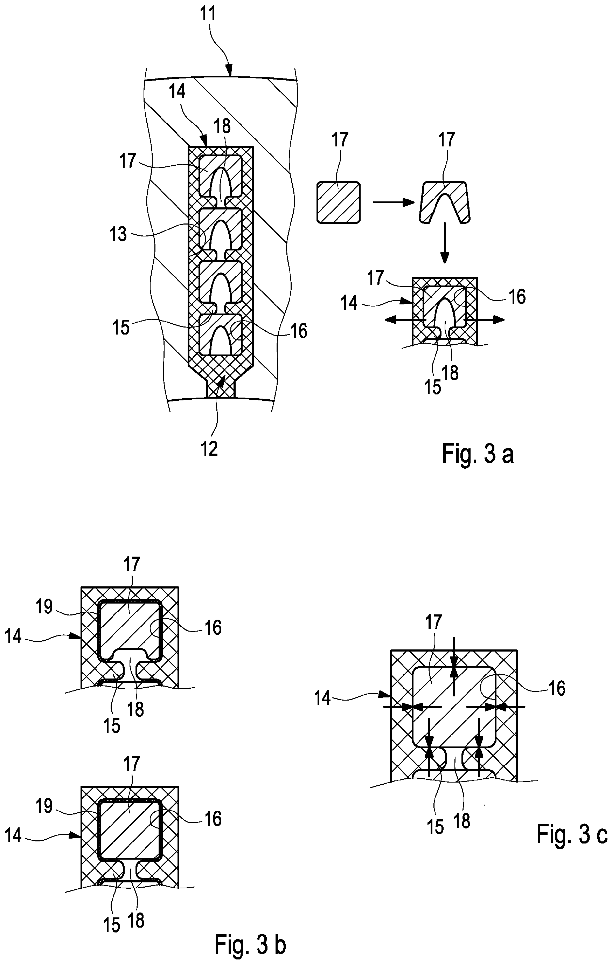

In der Figur 3a ist eine mögliche Festhaltung eines elektrischen Leiters in der erfindungsgemäßen zahnförmigen Ausgestaltung der Nutwandisolation 14 dargestellt. Dabei ist ein Statorblech dargestellt, indem eine Statornut mit einer Nutwandisolation angeordnet ist, wobei die Nutwandisolation die erfindungsgemäße verzahnte Ausgestaltung aufweist. In der verzahnten Ausgestaltung der Nutwandisolation 14 sind in jeder der gebildeten Aussparungen elektrischen Leiter axial angeordnet. Die elektrischen Leiter sind u-förmig geprägt ausgebildet, wodurch sich in einer Aussparung der zahnförmigen Ausgestaltung ein Hohlraum ausbildet, der zusammen mit einer Spalte, die durch zwei sich gegenüberliegende Zähne der zahnförmigen Ausgestaltung ausgebildet wird, einen Fluidkanal ausbilden. Die elektrischen Leiter sind dabei in die zahnförmige Ausgestaltung, insbesondere in die Ausnehmungen, eingeklemmt.

In der Figur 3a wird zudem ein Verfahren zum Einstellen eines elektrischen Leiters 17 in eine erfindungsgemäße zahnförmige Ausgestaltung der Nutwandisolation 14 dargestellt. Dabei wird ein elektrischer Leiter 17, der vorzugsweise rechteckig ausgebildet ist, u-förmig geprägt, derart, dass die beiden Schenkel der u-förmigen Ausprägung in einem Winkel nach außen abstehen. Durch Zusammendrücken der abstehenden Schenkel des u-förmigen Leiters wird dieser in eine Aussparung der zahnförmigen Ausgestaltung eingeklemmt. Somit wird der u-förmig geprägte elektrische Leiter durch einen Federeffekt in der Nutwandisolation festgehalten.

In der Figur 3b wird eine alternativ mögliche Festhaltung eines elektrischen Leiters 17 in der erfindungsgemäßen zahnförmigen Ausgestaltung der Nutwandisolation 14 dargestellt. Dabei ist eine zahnförmig ausgestaltete Nutwandisolation 14 dargestellt, in die ein u-förmig geprägter elektrischer Leiter 17 eingebracht ist, wobei zwischen der Nutwandisolation 14 und dem elektrischen Leiter 17 ein Spalt breit gespreizt ausgebildet ist, so dass der elektrische Leiter 17 in einer Aussparung 16 der Nutwandisolation 14 eingeklemmt ausgebildet ist.

In der Figur 3b ist zudem ein alternativ mögliches Verfahren zur Festhaltung eines elektrischen Leiters 17 in der erfindungsgemäßen zahnförmigen Ausgestaltung der Nutwandisolation 14 dargestellt, dabei wird ein elektrischer Leiter 17 in einer Aussparung 16 der zahnförmigen Ausgestaltung der Nutwandisolation 14 in einem Abstand zur Nutwandisolation 14 eingesetzt, wobei an dem elektrischen Leiter 17 oder an der Nutwandisolation 14 ein Klebemittel angebracht ist, so dass der elektrischen Leiter 17 in der zahnförmigen Ausgestaltung der Nutwandisolation 14 über einen Klebespalt 19 verklebt wird. Vorzugsweise erfolgt die Verklebung dabei durch eine thermische Aktivierung des Klebemittels.

In der Figur 3c wird eine weitere alternativ mögliche Festhaltung eines elektrischen Leiters 17 in der erfindungsgemäßen zahnförmigen Ausgestaltung der Nutwandisolation 14 dargestellt. Dabei ist eine zahnförmig ausgestaltete Nutwandisolation 14 dargestellt, in die ein rechteckig ausgebildeter elektrischer Leiter 17 eingepresst ist.

Die in der Figur 3c dargestellte alternative Festhaltung wird mittels einer Presspassung des elektrischen Leiters 17 in der Aussparung 16 der zahnförmigen Ausgestaltung der Nutwandisolation 14 realisiert.

### Bezuqszeichenliste

- 10: Elektromotor
- 11: Statorblech
- 12: Statornut
- 13: Nutwand
- 14: zahnförmig ausgestaltete Nutwandisolation
- 15: Zahn/Zähne
- 16: Aussparung(en)
- 17: elektrische(r) Leiter
- 18: Spalt, Fluidkanal
- 19: Klebespalt

## Patentansprüche

1. Elektromotor (10) umfassend einen Statorkörper mit einem Statorblechpaket (11) und mindestens einer Statornut (12), wobei die mindestens eine Statornut (12) eine Nutwand (13) mit einer Nutwandisolation (14) zur elektrischen Isolation aufweist, sowie mindestens einen elektrischen Leiter (17), wobei die Statornut (12) ausgebildet ist, den elektrischen Leiter aufzunehmen, **dadurch gekennzeichnet, dass** die Nutwandisolation (14) eine zahnförmige Ausgestaltung aufweist.

2. Elektromotor (10) nach Anspruch 1, **dadurch gekennzeichnet, dass** die Nutwandisolation (14) auf einer Fläche mindestens eines Statorblechs des Statorblechpakets (11) ausgebildet ist.

3. Elektromotor (10) nach Anspruch 1 oder 2, **dadurch gekennzeichnet, dass** die Nutwandisolation (14) durch die zahnförmige Ausgestaltung mindestens eine Aussparung (16) ausbildet, die eingerichtet ist, eine Lage mindestens eines in der mindestens einen Statornut (12) angeordneten elektrischen Leiters (17) festzulegen.

4. Elektromotor (10) nach einem der voranstehenden Ansprüche, **dadurch gekennzeichnet, dass** die zahnförmige Ausgestaltung eingerichtet ist, in der mindestens einen Statornut (12) angeordnete elektrische Leiter (17) mit einem bestimmten Abstand zueinander aufzunehmen.

5. Elektromotor (10) nach einem der voranstehenden Ansprüche, **dadurch gekennzeichnet, dass** die Nutwandisolation (14) durch die zahnförmige Ausgestaltung Spalte (18) ausbildet.

6. Elektromotor (10) nach einem der voranstehenden Ansprüche, **dadurch gekennzeichnet, dass** mindestens ein elektrischer Leiter (17) geprägt ausgebildet ist.

7. Elektromotor (10) nach Anspruch 6, **dadurch gekennzeichnet, dass** der mindestens eine elektrische Leiter (17) u-förmig geprägt ausgebildet ist.

8. Elektromotor (10) nach einem der voranstehenden Ansprüche, **dadurch gekennzeichnet, dass** der mindestens eine elektrische Leiter (17) in die mindestens eine Statornut (12) einklebbar oder einklemmbar oder einpressbar ausgebildet ist.

9. Verfahren zur Herstellung eines Elektromotors (10) nach einem der Ansprüche 1 bis 8, umfassend einen Statorkörper mit einem Statorblechpaket (11) und mindestens einer Statornut (12), wobei die mindestens eine Statornut (12) eine Nutwand (13) mit einer Nutwandisolation (14) zur elektrischen Isolation aufweist und die mindestens eine Statornut (12) eingerichtet ist, elektrische Leiter (17) aufzunehmen, umfassend die Schritte:
a) Herstellung eines Stators mit dem Statorblechpaket (11) und der mindestens einen Statornut (12) in einem Spritzguss,
b) Gleichzeitige Ausformung einer zahnförmigen Ausgestaltung der Nutwandisolation (14) während des Spritzgusses,
c) Bereitstellung mindestens eines elektrischen Leiters (17),
d) Einbringen des mindestens einen elektrischen Leiters (17) in die zahnförmig ausgestaltete Nutwandisolation (14),
e) Ausbildung mindestens eines Spalts (18) durch die zahnförmige Ausgestaltung,
f) Inbetriebnahme des Elektromotors und Durchlaufen des mindestens einen Spalts (18) mit einem Fluid.

10. Verfahren nach Anspruch 9, **dadurch gekennzeichnet, dass** der mindestens eine elektrische Leiter vor der Einbringung in die zahnförmig ausgestaltete Nutwandisolation (14) geprägt wird.
